# EUROPEAN PATENT SPECIFICATION

(11) **EP 3 686 052 B1**
(45) Date of publication and mention of the grant of the patent: **25.08.2021**
(21) Application number: 20153577.0
(22) Date of filing: 24.01.2020
(51) Int. Cl.: B60N 3/04

(54) **CAR CARPET**
KFZ-FUSSMATTE
TAPIS DE VEHICULE

(30) Priority: 24.01.2019 IT 201900001103
(43) Date of publication of application: 29.07.2020
(73) Proprietor: Plastar S.r.l., 35030 Rubano (PD) (IT)
(72) Inventor: Ardinghi, Andrea, 35030 Rubano (PD) (IT)
(74) Representative: Fisauli, Beatrice A. M.

(56) References cited:
- DE-A1- 2 438 924
- FR-A1- 2 819 226
- KR-A- 20180 086 587

## Description

The present invention refers to a car carpet. More particularly, it refers to a car carpet suitable for perfuming the passenger compartment of a car.

As is known, there is a need to perfume the passenger compartment of cars with perfuming devices that are usually hung on the rearview mirror or bound to the aeration mouths arranged on the car dashboard.

Besides, perfuming car carpets have been marketed to perfume the passenger compartments of cars. Document FR2819226A1 discloses car carpet with perfuming action, wherein it comprises a woven support and a containing body that is adapted to contain a removable perfuming element; a seat being formed in said containing body and being adapted to receive the removable perfuming element.

According to a form of realization, such car carpets are usually subjected to perfuming treatments to perfume the car carpet itself. However, this solution has an efficacy of limited duration, so that it is necessary to treat the car carpet again to reactivate the perfuming action.

Moreover, car carpets with perfuming action for the passenger compartments of the cars are known in which perfuming powders and/or granules are inserted under the car door sill threshold, welded on the driver's side car carpet.

Even in this case, the effectiveness of the fragrance is limited in time since the effectiveness of the fragrance is bound to the action of the aforesaid powders and/or granules.

Furthermore, in the case the car door sill threshold is torn due to wear caused by the movement of the driver's shoes, the powders and/or the granules are indesirably dispersed.

Another problem of the perfuming car carpets according to the prior art is related to the impossibility of regulating the perfuming action.

The object of the invention is to remove the above-mentioned drawbacks and still others by providing a car carpet suitable for perfuming the passenger compartment of a car comfortably and effectively.

A further object of the invention is to provide a car carpet having a continuous perfuming action in a car.

Another object of the invention is to provide a car carpet having an adjustable perfuming action that can be adjusted as desired by the car user.

All the above-mentioned objects and advantages are reached according to the invention with a car carpet with perfuming action, comprising a woven support and a containing body that is adapted to contain a removable perfuming element.

The containing body is received in a through hole that has a shape corresponding to the containing body and is formed in the woven support. A seat is formed in said containing body and is adapted to receive the removable perfuming element.

Accordingly, the car carpet according to the invention allows to perfume a vehicle continuously in that when the perfuming body has exhausted its effectiveness in terms of fragrance, the perfuming body can be replaced with a new perfuming body having a full perfuming capacity.

In particular, the containing body comprises adjusting means that adjust the perfuming flow coming from the perfuming element so as to partially prevent the perfuming action depending on the wishes of the user.

Besides, the containing body may comprise a lower body and a cap. The lower body is adapted to be placed under the woven support and in which the seat is formed to receive the perfuming element.

The cap is adapted to be fixed above the lower body and in which at least one fissure is formed to allow the perfume to pass from the perfuming element to the outside.

Through this configuration, it is sufficient to lift the cap from the lower body and insert or replace the perfuming element with an operation that is comfortable and fast.

Furthermore, the presence of one or more fissures allows the perfuming element to disperse the perfume outside the containing body.

Advantageously, adjusting means may be included and are adapted to close or open, completely or partially, the at least one fissure so as to adjust the perfuming action.

The cap may include a circular body which is defined by a perimeter raised edge and in which the adjusting means include an adjusting disc which is adapted to be placed rotatably on the circular body inside the perimeter edge and in which a through opening is formed.

Thus, it is sufficient to rotate the adjusting disc to adjust the amount of perfume to be entered into the passenger compartment of the vehicle.

The rotation and the contemporary constraint between the adjusting disc and the cap are obtained for the fact that a central hole is formed in the cap and the adjusting disc includes a central pin which is adapted to be inserted into the hole, so that the adjusting disc can not be separated from the cap, but it can even so rotate with respect to the cap.

In order to have a complete opening of the one or more fissures, the opening itself may have a surface extension equal to that of the one or more fissures.

Advantageously, the adjusting disc may include a wall having a surface extension equal to that of the one or more fissures so as to completely close the passage of perfume from the perfuming element.

Besides, the lower body and the cap may be connected to each other through connecting means so as not to lose the cap during the operations of replacing the perfuming element.

Further features and details of the invention will be better understood from the following specification that is supplied by way of a non-limiting example, as well as from the annexed drawing, wherein:
Figure 1 is a schematic top view of the carpet, according to the invention;
Figure 2 is a schematic axonometric side view of a containing body included in the carpet, according to the invention;
Figures 3, 4 and 5 are schematic axonometric views of three distinct elements forming the containing body in Figure 2.

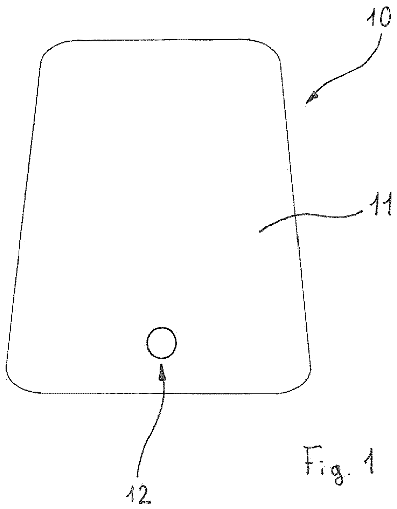

With reference to the Figure 1, reference number 10 denotes a car carpet that is suitable for perfuming the passenger compartment of the vehicle on which the car carpet is positioned.

The car carpet 10 includes a woven support 11 and a containing body 12 that is adapted to contain a perfuming element, not shown in the figures.

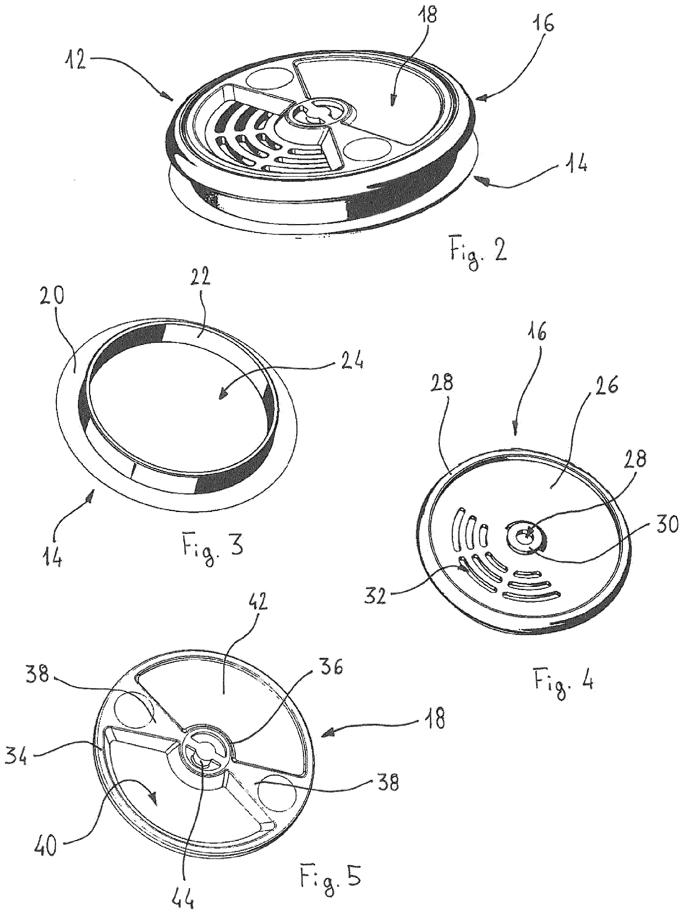

The containing body 12, shown as a whole in Figure 2, includes:
- a lower body 14, illustrated individually in Figure 3;
- a cap 16, illustrated individually in Figure 4 and adapted to be fixed above the lower body 14;
- an adjusting disc 18, illustrated individually in Figure 5 and adapted to be arranged above the cap 16 rotatably with respect to the same cap 16.

The lower body 14 includes a circular base 20 from which an annular body 22 protrudes upwards, inside which a circular seat 24 is thus defined and is adapted to receive a perfuming element.

The cap 16 includes a circular body 26 defined by a perimeter edge 28 that is raised with respect to the same circular body 26.

A hole 28 is formed in the center of the circular body 26 that rises around the hole 28 itself.

The adjusting disc 18 includes an annular body 34 which is connected to a central ring 36 by means of two fins 38 which divide the same adjusting disc 18 into two parts.

A through opening 40 is formed between the annular body 34 and the central ring 36 on the one part, while a separation wall 42 is defined on the opposite part.

A central pin 44 is placed in the central ring 36 and has to be inserted into the hole 28 of the cap 16, so that the adjusting disc 18 can not be separated from the cap 16, but in any case it can rotate with respect to the same cap 16.

The woven support 11 of the carpet 10 according to the invention has a hole whose diameter is equal to the diameter of the annular body 22, so that the same annular body 22 can be inserted into said hole from below and the peripheral portion of the circular base 20 abuts on the carpet.

The height of the annular body 22 is substantially equal to the thickness of the woven support 11 of the carpet 10.

Once the perfuming element, for example in the form of a pod or capsule, has been positioned inside the circular seat 24, the same circular seat 24 is closed with the cap 16 which also has a lower ring which is adapted to interfere with the annular body 22.

In this way, the lower body 14 and the cap 16 are locked together and include the perfuming body inside them.

In use, the adjusting disc 18 is already mounted on the cap 16 and allows to adjust the amount of perfume flowing from the fissures 32. In fact, by rotating the adjusting disc 18 with respect to the cap 16, it is possible to arrange the through opening 40 in correspondence of the fissures 32.

Alternatively, it is possible to arrange the separation wall 42 so as to close the fissures 32 and prevent the passage of perfume from the perfuming body received in the circular seat 24.

Otherwise, it is possible to partially close the perfume passage by arranging the separation wall 42 so as to partially close the fissures 32.

In order to obtain the aforesaid adjustment, the opening 40 has a surface extension at least equal to that of the fissures 32 and, at the same time, the wall 42 of the adjusting disc has a surface extension at least equal to that of the fissures 32.

According to a variant of the invention, the cap 16 may be coupled to the lower body 14 by means of a lanyard or another coupling means so as to prevent the same cap 16 from being lost during the charging operations when the circular seat 24 is charged with a new perfuming body.

Variants are possible which are to be considered as included in the scope of protection as defined by the annexed claims.

For example, the cap portion 16 can be made of a breathable material instead of being perforated with the fissures 32.

Besides, the shape of the circular seat 24 as well as the shape of the perfuming body can be different from the circular shape, for example the shape can be square or rectangular or other.

Furthermore, a carpet according to the invention can have more than one containing body 12.

## Claims

1. Car carpet (10) with perfuming action, wherein it comprises a woven support (11) and a containing body (12) that is adapted to contain a removable perfuming element, said containing body (12) being received in a through hole that has a shape corresponding to the containing body (12) and is formed in the woven support (11); a seat (24) being formed in said containing body (12) and being adapted to receive the removable perfuming element; **characterized by** the fact that
the containing body (12) comprises adjusting means (18, 32, 40) that adjust the perfuming flow coming from the perfuming element.

2. Car carpet (10) according to the preceding claim, wherein the containing body (12) comprises:
- a lower body (14) which is adapted to be placed under the woven support (11) and in which the seat (24) is formed to receive the perfuming element;
- a cap (16) which is adapted to be fixed on the upper part of the lower body (14) and in which at least one fissure (32) is formed to allow the perfume to pass from the perfuming element to the outside.

3. Car carpet (10) according to the preceding claim, wherein adjusting means (18) are included and are adapted to close or open, completely or partially, the at least one fissure (32).

4. Car carpet (10) according to the preceding claim, wherein the cap (16) includes a circular body (26) which is defined by a perimeter raised edge (28) and in which the adjusting means include an adjusting disc (18) which is adapted to be placed rotatably on the circular body (26) inside the perimeter edge (28) and in which a through opening (40) is formed.

5. Car carpet (10) according to the preceding claim, wherein a central hole (28) is formed in the cap (16) and the adjusting disc (18) includes a central pin (44) which is adapted to be inserted in the hole (28), so that the adjusting disc (18) can not be separated from the cap (16), but it can even so rotate with respect to the same cap (16).

6. Car carpet (10) according toclaim 4 or 5, wherein the opening (40) has a surface extension equal to that of the at least one fissure (32).

7. Car carpet (10) according to one of claims 4 to 6, wherein the adjusting disc (18) includes a wall (42) having a surface extension equal to that of the at least one fissure (32).

8. Car carpet (10) according to one of the preceding claims, wherein the lower body (14) and the cap (16) are connected to each other through connecting means.

## Patentansprüche

1. Autoteppich (10) mit parfümierender Wirkung, wobei er einen gewebten Träger (11) und einen Aufnahmekörper (12) umfasst, der angepasst ist, um ein entfernbares parfümierendes Element zu enthalten, wobei der Aufnahmekörper (12) in einem Durchgangsloch aufgenommen wird, das eine Form hat, die dem Aufnahmekörper (12) entspricht und in dem gewebten Träger (11) ausgebildet ist; wobei ein Sitz (24) in dem Aufnahmekörper (12) ausgebildet ist und angepasst ist, um das entfernbare parfümierende Element aufzunehmen; **dadurch gekennzeichnet, dass** der Aufnahmekörper (12) Einstellmittel (18, 32, 40) umfasst, die den von dem Beduftungselement kommenden Beduftungsstrom einstellen.

2. Autoteppich (10) nach dem vorhergehenden Anspruch, wobei der Aufnahmekörper (12) umfasst:
- einen unteren Körper (14), der angepasst ist, um unter dem gewebten Träger (11) platziert zu werden, und in dem der Sitz (24) ausgebildet ist, um das parfümierende Element aufzunehmen;
- eine Kappe (16), die geeignet ist, auf dem oberen Teil des unteren Körpers (14) befestigt zu werden, und in der mindestens ein Schlitz (32) ausgebildet ist, um das Parfüm von dem parfümierenden Element nach außen gelangen zu lassen.

3. Autoteppich (10) nach dem vorhergehenden Anspruch, wobei Verstellmittel (18) enthalten sind, die geeignet sind, den mindestens einen Schlitz (32) vollständig oder teilweise zu schließen oder zu öffnen.

4. Autoteppich (10) nach dem vorhergehenden Anspruch, wobei die Kappe (16) einen kreisförmigen Körper (26) aufweist, der durch einen umlaufenden erhöhten Rand (28) begrenzt ist und in dem die Verstellmittel eine Verstellscheibe (18) aufweisen, die auf dem kreisförmigen Körper (26) innerhalb des umlaufenden Randes (28) drehbar auflegbar ist und in dem eine Durchgangsöffnung (40) ausgebildet ist.

5. Autoteppich (10) nach dem vorhergehenden Anspruch, wobei in der Kappe (16) ein zentrales Loch (28) ausgebildet ist und die Verstellscheibe (18) einen zentralen Stift (44) aufweist, der dazu eingerichtet ist, in das Loch (28) eingesetzt zu werden, so dass die Verstellscheibe (18) nicht von der Kappe (16) getrennt werden kann, sondern sie kann sich sogar in Bezug auf dieselbe Kappe (16) drehen.

6. Autoteppich (10) nach Anspruch 4 oder 5, wobei die Öffnung (40) eine Flächenausdehnung hat, die derjenigen des mindestens einen Schlitz (32) entspricht.

7. Autoteppich (10) nach einem der Ansprüche 4 bis 6, wobei die Verstellscheibe (18) eine Wand (42) aufweist, deren Flächenausdehnung gleich derjenigen des mindestens einen Schlitzes (32) ist.

8. Autoteppich (10) nach einem der vorhergehenden Ansprüche, wobei der untere Körper (14) und die Kappe (16) durch Verbindungsmittel miteinander verbunden sind.

## Revendications

1. Tapis de voiture (10) à action parfumante, dans lequel il comprend un support tissé (11) et un corps contenant (12) qui est adapté pour contenir un élément parfumant amovible, ledit corps contenant (12) étant reçu dans un trou traversant qui a une forme correspondant au corps contenant (12) et est formé dans le support tissé (11); un siège (24) étant formé dans ledit corps contenant (12) et étant adapté pour recevoir l'élément parfumant amovible; **caractérisé en ce que** le corps contenant (12) comprend des moyens de réglage (18, 32, 40) qui règlent le flux de parfum provenant de l'élément parfumant.

2. Tapis de voiture (10) selon la revendication précédente, dans lequel le corps contenant (12) comprend:
- un corps inférieur (14) qui est adapté pour être placé sous le support tissé (11) et dans lequel le siège (24) est formé pour recevoir l'élément parfumant;
- un capuchon (16) qui est adapté pour être fixé sur la partie supérieure du corps inférieur (14) et dans lequel au moins une fissure (32) est formée pour permettre au parfum de passer de l'élément parfumant vers l'extérieur.

3. Tapis de voiture (10) selon la revendication précédente, dans lequel des moyens de réglage (18) sont inclus et sont adaptés pour fermer ou ouvrir, complètement ou partiellement, au moins une fissure (32).

4. Tapis de voiture (10) selon la revendication précédente, dans lequel le capuchon (16) comprend un corps circulaire (26) qui est défini par un bord périphérique relevé (28) et dans lequel les moyens de réglage comprennent un disque de réglage (18) qui est adapté pour être placé de manière rotative sur le corps circulaire (26) à l'intérieur du bord périphérique (28) et dans lequel une ouverture traversant (40) est formée.

5. Tapis de voiture (10) selon la revendication précédente, dans lequel un trou central (28) est formé dans le capuchon (16) et le disque de réglage (18) comprend un pivot central (44) qui est adapté pour être inséré dans le trou (28), de sorte que le disque de réglage (18) ne peut pas être séparé du capuchon (16), mais il peut même tourner par rapport au même capuchon (16).

6. Tapis de voiture (10) selon la revendication 4 ou 5, dans lequel l'ouverture (40) a une extension de surface égale à celle d'au moins une fissure (32).

7. Tapis de voiture (10) selon l'une des revendications 4 à 6, dans lequel le disque de réglage (18) comprend une paroi (42) ayant une extension de surface égale à celle d'au moins une fissure (32).

8. Tapis de voiture (10) selon l'une des revendications précédentes, dans lequel le corps inférieur (14) et le capuchon (16) sont reliés l'un à l'autre par des moyens de liaison.
